(19) Europäisches Patentamt
European Patent Office
Office européen des brevets

(11)  EP 3 766 652 B1

(12)  **EUROPEAN PATENT SPECIFICATION**

(45) Date of publication and mention
of the grant of the patent:
**12.04.2023  Bulletin 2023/15**

(21) Application number: **19186481.8**

(22) Date of filing: **16.07.2019**

(51) International Patent Classification (IPC):
**B29C 45/00** (2006.01)    **C08F 210/06** (2006.01)
B29K 23/00 (2006.01)    B29L 31/00 (2006.01)
B65D 81/34 (2006.01)

(52) Cooperative Patent Classification (CPC):
(C-Sets available)
**C08F 210/06; B29C 45/0001;** B29K 2023/14;
B29L 2031/712; B65D 81/3453          (Cont.)

(54) **USE OF INJECTION MOLDED CONTAINER FOR MICROWAVE**

VERWENDUNG VON SPRITZGEGOSSENEM BEHÄLTER FÜR MIKROWELLEN

UTILISATION DE RÉCIPIENT MOULÉ PAR INJECTION POUR MICRO-ONDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.01.2021  Bulletin 2021/03**

(73) Proprietor: **Basell Poliolefine Italia S.r.l.**
**20121 Milano (IT)**

(72) Inventors:
• **Cavalieri, Claudio**
  **44122 Ferrara (IT)**
• **Ferraro, Gianpiero**
  **44122 Ferrara (IT)**
• **Prini, Giansiro**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 810 883        EP-A1- 2 810 884
WO-A1-2009/077328    WO-A1-2016/087185
WO-A1-2019/012110**

EP 3 766 652 B1

(52) Cooperative Patent Classification (CPC): (Cont.)

C-Sets
**C08F 210/06, C08F 4/6492;**
**C08F 210/06, C08F 4/6543;**
C08F 210/06, C08F 210/14, C08F 2500/04,
C08F 2500/12, C08F 2500/27, C08F 2500/34,
C08F 2500/35

C-Sets

**Description**

FIELD OF THE INVENTION

The present disclosure relates to microwavable containers to be used for food comprising random propylene 1-hexene copolymers which have improved properties in terms of overall migration limit.

BACKGROUND

Containers made of propylene polymers can be found, for example, in WO 2009/083500, which relates to tank obtained by using random propylene 1-hexene copolymers. Said copolymers have a melting point higher than 145°C and an MFR comprised between 0.8 g/10 min and 30 g/10 min. However, this application does not relates to the use of this kind of copolymer for food containers. The use of a propylene 1-hexene copolymer for producing an injection molded container is also known from WO 2009/077328 A1.

WO 2014/195074 relates to container in particular container for food comprising a propylene ethylene 1-hexene terpolymer having particular features. The containers show improved haze and container impact test.

BRIEF SUMMARY

Now it has surprisingly been found that propylene 1-hexene copolymers can be used for producing microwavable containers in view of the particular low overall migration (OM) limit under condition 5 (OM5).

Thus, the present disclosure is directed to the use of a propylene 1-hexene copolymer for producing an injection molded container to be used in a microwave oven; wherein the propylene 1-hexene copolymer is characterized by the following features:

a 1-hexene derived units content of between 0.5 and 3.1 % by weight;
a molecular weight distribution (MWD), expressed in terms of $M_w/M_n$, greater than 4.0;

- a melt flow rate (MFR; 230°C, 2,16 kg) of between 5 to 75 g/10 min; a fraction soluble in xylene at 25°C of lower than 2.5 wt%.

DETAILED DESCRIPTION

The present disclosure is directed to the use of a propylene 1-hexene copolymer for producing an injection molded container to be used in a microwave oven; wherein the propylene 1-hexene copolymer is characterized by the following features:

- a 1-hexene derived units content of between 0.5 and 3.1 % by weight; preferably from 0.6 to 2.6 wt%; more preferably from 0.8 to 2.3 wt%;
- a molecular weight distribution (MWD), expressed in terms of $M_w/M_n$, greater than 4.0; preferably greater than 4.5, more preferably greater than 5.2;
- a melt flow rate (MFR; 230°C, 2,16 kg) of between 5 to 75 g/10 min; preferably comprised between 7 and 20 g/10 min or comprised between 32 and 53 g/10 min;
- a fraction soluble in xylene at 25°C of lower than 2.5 wt%; preferably lower than 2.2 wt%; more preferably lower than 2.0 wt%.

The propylene 1-hexene copolymer of the present disclosure is defined as containing only propylene and 1-hexene comonomers.

The microwavable containers of the present disclosure are characterized by having a particular low OM5 measured according to the plastic regulation (EU) 10/2011 - migration test. The test is carried out for 2 hours at 100°C and reflux for 1 hour at 121°C using vegetable oil (food simulant D2).

Preferably the propylene 1-hexene copolymer to be used for the container according to the present disclosure shows an OM5 value lower than 5.0 mg/dm$^2$; more preferably lower than 4.5 mg/dm$^2$; even more preferably lower than 4.2 mg/dm$^2$ such as lower than 4.0 mg/dm$^2$ preferably the lower limit being 0.5 mg/dm$^2$.

Such low values can be found in the finished container.

The containers of the present disclosure are produced by using injection molding techniques. Thus a further embodiment of the present disclosure is a process for producing injection molding articles comprising the step of injecting molten material into a container mould wherein the material comprises the propylene 1-hexene copolymer of the present disclosure.

The process for preparing the propylene 1-hexene copolymer of the present disclosure is carried out in presence of a highly stereospecific heterogeneous Ziegler-Natta catalyst. The Ziegler-Natta catalysts suitable for producing the propylene 1-hexene copolymer of the disclosure comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$ where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1 ,trifluoropropyl-2-ethylpiperidinyl-dimethoxysilane and 1,1,1 ,trifluoropropyl-metildimethoxysilane. The external electron donor compound is used in such an amount to give a molar ratio between the organo-aluminum compound and said electron donor compound of from 0.1 to 500; preferably from 1 to 100; more preferably from 2 to 50.

The polymerization process can be carried out according to known techniques, for example, slurry polymerization using as a diluent an inert hydrocarbon solvent, or bulk polymerization using the liquid monomer (for example, propylene) as a reaction medium. Moreover, it is possible to carry out the polymerization process in gas-phase operating in one or more fluidized or mechanically agitated bed reactors.

The polymerization is generally carried out at temperatures of from 20 to 120°C, preferably of from 40 to 80°C. When the polymerization is carried out in gas-phase, the operating pressure is generally between 0.5 and 5 MPa, preferably between 1 and 4 MPa. In bulk polymerization, the operating pressure is generally between 1 and 8 MPa, preferably between 1.5 and 5 MPa. Hydrogen is typically used as a molecular weight regulator.

The propylene 1-hexene copolymer of the present disclosure may also contain the additives that are commonly used in the art, such as anti-oxidants, process stabilizers, slip agents, antistatic agents, antiblock agents, nucleating/clarifier agents and antifog agents in order to obtain the microwavable container.

The microwavable container of the present disclosure preferably comprises one or more bottom sides, three or more lateral sides and optionally one or more top sides.

The wall can have a thickness higher than 0.2 mm; preferably higher than 0.5 mm; preferably comprised between 0.5 and 5 mm.

The following examples are given in order to better illustrate the invention.

EXAMPLES

**Determination of xylene soluble content**

Xylene solubles are determined according to ISO 16152:2005; with solution volume of 250 ml, precipitation at 25°C for 20 minutes, 10 of which with the solution in agitation (magnetic stirrer), and drying at 70°C under vacuum.

**Molecular weight distribution (Mw/Mn)**

Molecular weights and molecular weight distributions were measured at 150 °C using a Waters Alliance GPCV/2000 instrument equipped with four mixed-bed columns PLgel Olexis having a particle size of 13 $\mu$m. The dimensions of the columns were 300 $\times$ 7.8 mm. The mobile phase used was vacuum distilled 1,2,4-trichlorobenzene (TCB) and the flow rate was kept at 1.0 ml/min. The sample solution was prepared by heating the sample under stirring at 150 °C in TCB for one to two hours. The concentration was 1 mg/ml. To prevent degradation, 0.1 g/l of 2,6-di-tert-butyl-p-cresol were added. 300 $\mu$l (nominal value) of solution were injected into the column set. A calibration curve was obtained using 10 polystyrene standard samples (EasiCal kit by Agilent) with molecular weights in a range from 580 to 7 500 000 Da. It was assumed that the K values of the Mark-Houwink relationship were:

$$K = 1.21 \times 10\text{-}4 \text{ dl/g and } \alpha = 0.706 \text{ for the polystyrene standards,}$$

$$K = 1.90 \times 10\text{-}4 \text{ dl/g and } \alpha = 0.725 \text{ for the experimental samples.}$$

A third order polynomial fit was used to interpolate the experimental data and obtain the calibration curve. Data acquisition and processing was done by using Waters Empowers 3 Chromatography Data Software with the GPC option.

**Melt flow rate (MFR)**

The melt flow rate (MFR) of the polymer was determined according to ISO 1133-1 2011 (230°C, 2.16 Kg).

**Determination of ethylene content of propylene ethylene copolymers by NMR**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode," C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with an 8% wt/v concentration. Each spectrum was acquired with a 90° pulse, 15 seconds of delay between pulses and CPD to remove $^1$H-$^{13}$C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride," M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE = 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

$$E\%\ mol = 100 * [PEP+PEE+EEE]$$

The weight percentage of ethylene content was evaluated using the following equation:

$$E\%\ wt. = \frac{100 * E\%\ mol * MW_E}{E\%\ mol * MW_E + P\%\ mol * MW_P}$$

where P% mol is the molar percentage of propylene content, while $MW_E$ and $MW_P$ are the molecular weights of ethylene and propylene, respectively.

The product of reactivity ratio $r_1 r_2$ was calculated according to Carman (C.J. Carman, R.A. Harrington and C.E. Wilkes, Macromolecules, 1977; 10, 536) as:

$$r_1 r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of propylene sequences was calculated as mm content from the ratio of the PPP mm$T_{\beta\beta}$ (28.90-29.65 ppm) and the whole $T_{\beta\beta}$ (29.80-28.37 ppm).

### Determination of ethylene and 1-butene content of propylene ethylene 1-butene terpolymers by NMR

$^{13}$C NMR spectra were acquired on a Bruker AV600 spectrometer equipped with cryo probe, operating 150.91 MHz MHz in the Fourier transform mode at 120 °C.

The peak of the $S_{\delta\delta}$ carbon (nomenclature according C.J. Carman, R.A. Harrington and C.E. Wilkes, Macromolecules, 10, 3, 536 (1977)) was used as internal reference at 29.9 ppm. About 30 mg of sample were dissolved in 0.5 ml of 1,1,2,2 tetrachloro ethane $d_2$ at 120 °C w. Each spectrum was acquired with a 90 ° pulse, 15 seconds of delay between pulses and CPD to remove $^1$H-$^{13}$C coupling. 512 transients were stored in 65 K data points using a spectral window of 9000 Hz.

Triad distribution was obtained using the following relations:

$$XPX = 100\ I_8/\Sigma$$

$$XPE = 100\ I_5/\Sigma$$

$$EPE = 100\ I_4/\Sigma$$

$$XBX = 100\ I_3/\Sigma$$

$$XBE = 100\ I_2/\Sigma$$

$$XEX = 100\ I_9/\Sigma$$

$$XEE = 100\ I_1/\Sigma$$

$$EEE = 100\ (0.5\ I_7 + 0.25\ I_6)/\Sigma$$

Where $\Sigma = I_8 + I_5 + I_4 + I_3 + I_2 + I_9 + I_1 + 0.5\ I_7 + 0.25\ I_6$

I are the areas of the corresponding carbon as reported in Table 1 and X can be propylene or 1-butene.

The molar content of Ethylene, Propylene and 1-Butene is obtained from triads using the following relations:

$$P\ (m\%) = XPX + XPE + EPE$$

$$B\ (m\%) = XBX + XBE + EBE$$

$$E\ (m\%) = EEE + XEE + XEX$$

Molar content was transformed in weight using monomers molecular weight.

Table 1 - Assignments of the $^{13}$C NMR spectrum of of ethylene propylene 1-butene terpolymers

| Number | Chemical Shift (ppm) | Carbon | Sequence |
|---|---|---|---|
| 1 | 37.64 - 37.35 | $S_{\alpha\delta}$ | PEE |

(continued)

| Number | Chemical Shift (ppm) | Carbon | Sequence |
|---|---|---|---|
| 2 | 37.35 - 37.15 | $T_{\beta\delta}$ | XBE |
| 3 | 35.27 - 34.92 | $T_{\beta\beta}$ | XBX |
| 4 | 33.29 - 33.15 | $T_{\delta\delta}$ | EPE |
| 5 | 30.93 - 30.77 | $T_{\beta\beta}$ | XPE |
| 6 | 30.35 - 30.26 | $S_{y\delta}$ | PEEE |
| 7 | 29.97 - 29.85 | $S_{\delta\delta}$ | EEE |
| 8 | 29.14 -28.31 | $T_{\beta\beta}$ | XPX |
| 9 | 24.88 - 24.14 | $S_{\beta\beta}$ | XEX |

**Determination of 1-hexene content of propylene 1-hexene copolymers by NMR**

$^{13}$C NMR spectra are acquired on an AV-600 spectrometer operating at 150.91 MHz in the Fourier transform mode at 120 °C. The peak of the propylene CH was used as internal reference at 28.83. The $^{13}$C NMR spectrum is acquired using the following parameters:

| | |
|---|---|
| Spectral width (SW) | 60 ppm |
| Spectrum centre (O1) | 30 ppm |
| Decoupling sequence | WALTZ 65 64pl |
| Pulse program | ZGPG |
| Pulse Length (P1) | for 90° |
| Total number of points (TD) | 32K |
| Relaxation Delay | 15s |
| Number of transients | 1500 |

The total amount of 1-hexene as molar percent is calculated from diad present in the measured NMR using the following relations:

$$[P] = PP + 0.5PH$$

$$[H] = HH + 0.5PH$$

Assignments of the $^{13}$C NMR spectrum of propylene 1-hexene copolymers have been calculated according to the following table:

Table 2 - Assignments of the 13C NMR spectrum of propylene 1-hexene terpolymers

| Area | Chemical Shift | Assignments | Sequence |
|---|---|---|---|
| 1 | 46.93 - 46.00 | $S_{\alpha\alpha}$ | PP |
| 2 | 44.50 - 43.82 | $S_{\alpha\alpha}$ | PH |
| 3 | 41.34 -4.23 | $S_{\alpha\alpha}$ | HH |
| 4 | 38.00 - 37.40 | $S\alpha\gamma + S\alpha\delta$ | PE |
| 5 | 35.70 -35.00 | 4B4 | H |
| 6 | 35.00 - 34.53 | $S\alpha\gamma + S\alpha\delta$ | HE |

(continued)

| Area | Chemical Shift | Assignments | Sequence |
|---|---|---|---|
| 7 | 33.75 33.20 | CH | H |
| 8 | 33.24 | T$\delta\delta$ | EPE |
| 9 | 30.92 | T$\beta\delta$ | PPE |
| 10 | 30.76 | S$\gamma\gamma$ | XEEX |
| 11 | 30.35 | S$\gamma\delta$ | XEEE |
| 12 | 29.95 | S$\delta\delta$ | EEE |
| 13 | 29.35 | 3B4 | H |
| 14 | 28.94 - 28.38 | CH | P |
| 15 | 27.43 - 27.27 | S$\beta\delta$ | XEE |
| 16 | 24.67 -24.53 | S$\beta\beta$ | XEX |
| 17 | 23.44 -23.35 | 2B4 | H |
| 18 | 21.80 - 19.90 | CH3 | P |
| 19 | 14.22 | CH3 | H |

### Melting temperature via Differential Scanning Calorimetry (DSC)

The melting points of the polymers (Tm) were measured by differential scanning calorimetry (DSC) on a Perkin Elmer DSC-1 calorimeter, previously calibrated against indium melting points, and according to ISO 11357-1, 2009 and 11357-3, 2011, at 20°C/min. The weight of the samples in every DSC crucible was kept at 6.0 $\pm$ 0.5 mg. In order to obtain the melting point, the weighted sample was sealed into aluminum pans and heated to 200°C at 20°C/minute. The sample was kept at 200°C for 2 minutes to allow a complete melting of all the crystallites, then cooled to 5°C at 20°C/minute. After standing 2 minutes at 5°C, the sample was heated for the second run time to 200°C at 20°C/min. In this second heating run, the peak temperature (Tm) was taken as the melting temperature.

### Overall migration test

Overall migration test acc. Reg. (EU) No 10/2011 has been conducted with standardized testing conditions 5 (OM5) using vegetable oil (food simulant D2).

### Example 1: propylene 1-hexene copolymer

Propylene 1-hexene copolymer is prepared by polymerising propylene and 1-hexene in the presence of a catalyst under continuous conditions in a plant comprising a polymerisation apparatus as described in EP 1 012 195 in a plant comprising a precontact section, a prepolymerisation section and a polymerisation apparatus that comprises two interconnected cylindrical reactors, riser and downcomer. Fast fluidisation conditions are established in the riser by feeding gas recycled from the gas-solid separator but the the "barrier feed" has not been used.

The catalyst employed comprises a catalyst component prepared by analogy with example 5 of EP-A-728769 but using microspheroidal $MgCl_2\cdot1.7C_2H_5OH$ instead of $MgCl_2\cdot2.1C_2H_5OH$. Such catalyst component is mixed with dicyclopentyl dimethoxy silane (DCPMS) as external donor and with triethylaluminium (TEAL) in the precontact section. The catalyst system is then subjected to pre-polymerisation before introducing it into the polymerisation apparatus.

The polymer particles exiting the reactor are subjected to a steam treatment to remove the reactive monomers and volatile substances and then dried. The polymer particles are extruded with a standard packing of stabilisers.

The main operative conditions of the polymerisation process are indicated in Table 3.

Table 3

| | Example 1 |
|---|---|
| | |

(continued)

| Precontact | |
|---|---|
| Temperature °C | 15 |
| Residence time (min) | 11 |
| Teal/donor ratio molar | 8 |
| **Prepolymerization** | |
| Temperature °C | 20 |
| Residence time (min) | 4.7 |
| **Polymerization** | |
| Temperature, °C | 80 |
| Pressure, bar | 25 |
| Residence time, min | 90 |
| H2/C3 mol/mol | 0.031 |
| C6/C6+C3 mol ratio | 0.008 |
| C6=1-hexene; C3=propylene; H2=hydrogen | |

### Example 2: propylene 1-hexene copolymer

The copolymer of Example 1 has been visbroken to MFR 40 g/10 min.

### Comparative Examples 3 and 4

The polymers of Comparative Examples 3 and 4 are respectively Clyrell RC549S and Moplen RP398T commercial grades sold by Lyondellbasell.
The polymers of Examples 1 and 2 and Comparative Examples 3 and 4 have been added with the additives reported in Table 4.

Table 4

| Additive | wt% |
|---|---|
| GMS 90 | 0.11 |
| A.O. 3114 | 0.5 |
| Ca Stearate | 0.05 |
| M.S. 168 | 0.1 |
| NX 8000 | 0.2 |

The properties of the polymers of Examples 1 and 2 and Comparative Examples 3 and 4 are reported in Table 5.

Table 5

| Ex | | Example 1 | Example 2 | Comparative Example 3 | Comparative Example 4 |
|---|---|---|---|---|---|
| MFR | g/10 min | 10 | 40 | 40 | 40 |
| C6 | wt% | 1.2 | 1.2 | - | - |
| C2 | wt% | - | - | 1.1 | 3.3 |
| C4 | wt% | - | - | 2.0 | - |
| XS | wt% | 1.6 | 1.9 | 5 | 6.3 |

(continued)

| Ex | | Example 1 | Example 2 | Comparative Example 3 | Comparative Example 4 |
|---|---|---|---|---|---|
| Mw/Mn | | 6.1 | 5.8 | 6.3 | 6.5 |
| Tm | °C | 157.5 | 157.2 | 151.7 | 147.4 |
| OM5 | mg/dm$^2$ | 1 | 3.9 | 9.1 | 20.5 |
| Examples 1 and 2 according to the disclosure show particularly low values of OM5. | | | | | |

**Claims**

1. The use of a propylene 1-hexene copolymer for producing an injection molded container to be used in a microwave oven wherein the propylene 1-hexene copolymer has the following features:

   - a 1-hexene content, measured by $^{13}$C NMR, of between 0.5 and 3.1 % by weight;
   - a molecular weight distribution, MWD, measured by GPC, expressed in terms of Mw/Mn, of greater than 4.0;
   - a melt flow rate, MFR; 230°C, 2.16 kg, ISO 1133-1 2011 , of between 5 to 75 g/10 min; and
   - a fraction soluble in xylene at 25°C, ISO 16152:2005, of lower than 2.5 wt%.

2. The use of a propylene 1-hexene copolymer for producing an injection molded container to be used in a microwave oven according to claim 1 wherein the 1-hexene content in the copolymer is comprised between 0.6 to 2.6 wt%.

3. The use of a propylene 1-hexene copolymer for producing an injection molded container to be used in a microwave oven according to claims 1 or 2 wherein the 1-hexene content in the copolymer is comprised between 0.8 to 1.8 wt%.

4. The use of a propylene 1-hexene copolymer for producing an injection molded container to be used in a microwave oven according to anyone of claims 1-3 wherein the Melt Flow Rate, MFR 230°C 2,16kg, of the copolymer ranges between 7 and 20 g/10 min.

5. The use of a propylene 1-hexene copolymer for producing an injection molded container to be used in a microwave oven according to anyone of claims 1-3 wherein the Melt Flow Rate, MFR 230°C 2,16kg, of the copolymer ranges between 32 and 53 g/10 min.

6. The use of a propylene 1-hexene copolymer for producing an injection molded container to be used in a microwave oven according to anyone of claims 1-5 wherein in the copolymer the fraction soluble in xylene at 25°C is lower than 2.2 wt%.

7. The use of a propylene 1-hexene copolymer for producing an injection molded container to be used in a microwave oven according to anyone of claims 1-6 wherein in the copolymer the fraction soluble in xylene at 25°C is lower than 2.0 wt%.

8. The use of a propylene 1-hexene copolymer for producing an injection molded container to be used in a microwave oven according to anyone of claims 1-7 wherein the copolymer shows an OM5 value, OM5 measured according to the plastic regulation (EU) 10/2011 - migration test, lower than 5.0 mg/dm$^2$.

9. The use of a propylene 1-hexene copolymer for producing an injection molded container to be used in a microwave oven according to anyone of claims 1-8 wherein the copolymer shows an OM5 value, OM5 measured according to the plastic regulation (EU) 10/2011 - migration test, lower than 4.5 mg/dm$^2$.

10. The use of a propylene 1-hexene copolymer for producing an injection molded container to be used in a microwave oven according to anyone of claims 1-9 wherein the copolymer shows an OM5 value, OM5 measured according to the plastic regulation (EU) 10/2011 - migration test, lower than 4.2 mg/dm$^2$.

**Patentansprüche**

1. Verwendung eines Propylen-1-Hexen-Copolymers zum Produzieren eines spritzgegossenen Behälters zur Verwendung in einem Mikrowellengerät, wobei das Propylen-1-Hexen-Copolymer die folgenden Merkmale aufweist:

   - einen 1-Hexengehalt, gemessen mittels $^{13}$C-NMR, zwischen 0,5 und 3,1 Gew.%;
   - eine Molekulargewichtsverteilung, MWD, gemessen mittels GPC, ausgedrückt in Form von Mw/Mn, größer als 4,0;
   - eine Schmelzflussrate, MFR; bei 230 °C, 2,16 kg gemäß ISO 1133-1 2011, zwischen 5 und 75 g/10 min; und
   - eine in Xylol bei 25 °C lösliche Fraktion gemäß ISO 16152:2005 kleiner als 2,5 Gew.%.

2. Verwendung eines Propylen-1-Hexen-Copolymers zum Produzieren eines spritzgegossenen Behälters zur Verwendung in einem Mikrowellengerät nach Anspruch 1, wobei der 1-Hexengehalt in dem Copolymer zwischen 0,6 und 2,6 Gew.% liegt.

3. Verwendung eines Propylen-1-Hexen-Copolymers zum Produzieren eines spritzgegossenen Behälters zur Verwendung in einem Mikrowellengerät nach Anspruch 1 oder 2, wobei der 1-Hexengehalt in dem Copolymer zwischen 0,8 und 1,8 Gew.% liegt.

4. Verwendung eines Propylen-1-Hexen-Copolymers zum Produzieren eines spritzgegossenen Behälters zur Verwendung in einem Mikrowellengerät nach einem der Ansprüche 1 bis 3, wobei die Schmelzflussrate, MFR, bei 230 °C, 2,16 kg, des Copolymers im Bereich zwischen 7 und 20 g/10 min liegt.

5. Verwendung eines Propylen-1-Hexen-Copolymers zum Produzieren eines spritzgegossenen Behälters zur Verwendung in einem Mikrowellengerät nach einem der Ansprüche 1 bis 3, wobei die Schmelzflussrate, MFR, bei 230 °C, 2,16 kg, des Copolymers im Bereich zwischen 32 und 53 g/10 min liegt.

6. Verwendung eines Propylen-1-Hexen-Copolymers zum Produzieren eines spritzgegossenen Behälters zur Verwendung in einem Mikrowellengerät nach einem der Ansprüche 1 bis 5, wobei die in Xylol bei 25 °C lösliche Fraktion in dem Copolymer kleiner als 2,2 Gew.% ist.

7. Verwendung eines Propylen-1-Hexen-Copolymers zum Produzieren eines spritzgegossenen Behälters zur Verwendung in einem Mikrowellengerät nach einem der Ansprüche 1 bis 6, wobei die in Xylol bei 25 °C lösliche Fraktion in dem Copolymer kleiner als 2,0 Gew.% ist.

8. Verwendung eines Propylen-1-Hexen-Copolymers zum Produzieren eines spritzgegossenen Behälters zur Verwendung in einem Mikrowellengerät nach einem der Ansprüche 1 bis 7, wobei das Copolymer einen OM5-Wert kleiner als 5,0 mg/dm$^2$ zeigt, wobei OM5 gemäß der Kunststoffverordnung (EU) 10/2011 - Migrationsprüfung gemessen wird.

9. Verwendung eines Propylen-1-Hexen-Copolymers zum Produzieren eines spritzgegossenen Behälters zur Verwendung in einem Mikrowellengerät nach einem der Ansprüche 1 bis 8, wobei das Copolymer einen OM5-Wert kleiner als 4,5 mg/dm$^2$ zeigt, wobei OM5 gemäß der Kunststoffverordnung (EU) 10/2011 - Migrationsprüfung gemessen wird.

10. Verwendung eines Propylen-1-Hexen-Copolymers zum Produzieren eines spritzgegossenen Behälters zur Verwendung in einem Mikrowellengerät nach einem der Ansprüche 1 bis 9, wobei das Copolymer einen OM5-Wert kleiner als 4,2 mg/dm$^2$ zeigt, wobei OM5 gemäß der Kunststoffverordnung (EU) 10/2011 - Migrationsprüfung gemessen wird.

**Revendications**

1. Utilisation d'un copolymère de propylène et de 1-hexène pour produire un récipient moulé par injection destiné à être utilisé dans un four à micro-ondes, le copolymère de propylène et de 1-hexène présentant les caractéristiques suivantes :

   - une teneur en 1-hexène, mesurée par $^{13}$C-RMN, entre 0,5 et 3,1 % en poids ;

- une distribution des poids moléculaires, MWD, mesurée par CPG, exprimée en termes de Mw/Mn, supérieure à 4,0 ;
- un indice de fluidité à chaud, MFR ; 230 °C, 2,16 kg, ISO 1133-1 2011, entre 5 et 75 g/10 min ; et
- une fraction soluble dans le xylène à 25 °C, ISO 16152:2005, inférieure à 2,5 % en poids.

2. Utilisation d'un copolymère de propylène et de 1-hexène pour produire un récipient moulé par injection destiné à être utilisé dans un four à micro-ondes selon la revendication 1, la teneur en 1-hexène dans le copolymère étant comprise entre 0,6 et 2,6 % en poids.

3. Utilisation d'un copolymère de propylène et de 1-hexène pour produire un récipient moulé par injection destiné à être utilisé dans un four à micro-ondes selon la revendication 1 ou 2, la teneur en 1-hexène dans le copolymère étant comprise entre 0,8 et 1,8 % en poids.

4. Utilisation d'un copolymère de propylène et de 1-hexène pour produire un récipient moulé par injection destiné à être utilisé dans un four à micro-ondes selon l'une quelconque des revendications 1 à 3, l'indice de fluidité à chaud, MFR 230 °C 2,16 kg, du copolymère étant situé dans la plage entre 7 et 20 g/10 min.

5. Utilisation d'un copolymère de propylène et de 1-hexène pour produire un récipient moulé par injection destiné à être utilisé dans un four à micro-ondes selon l'une quelconque des revendications 1 à 3, l'indice de fluidité à chaud, MFR 230 °C 2,16 kg, du copolymère étant situé dans la plage entre 32 et 53 g/10 min.

6. Utilisation d'un copolymère de propylène et de 1-hexène pour produire un récipient moulé par injection destiné à être utilisé dans un four à micro-ondes selon l'une quelconque des revendications 1 à 5, où, dans le copolymère, la fraction soluble dans le xylène à 25 °C est inférieure à 2,2 % en poids.

7. Utilisation d'un copolymère de propylène et de 1-hexène pour produire un récipient moulé par injection destiné à être utilisé dans un four à micro-ondes selon l'une quelconque des revendications 1 à 6, où, dans le copolymère, la fraction soluble dans le xylène à 25 °C est inférieure à 2,0 % en poids.

8. Utilisation d'un copolymère de propylène et de 1-hexène pour produire un récipient moulé par injection destiné à être utilisé dans un four à micro-ondes selon l'une quelconque des revendications 1 à 7, le copolymère présentant une valeur de MG5, la MG5 étant mesurée selon le test de migration du règlement (UE) n° 10/2011, inférieure à 5,0 mg/dm$^2$.

9. Utilisation d'un copolymère de propylène et de 1-hexène pour produire un récipient moulé par injection destiné à être utilisé dans un four à micro-ondes selon l'une quelconque des revendications 1 à 8, le copolymère présentant une valeur de MG5, la MG5 étant mesurée selon le test de migration du règlement (UE) n° 10/2011, inférieure à 4,5 mg/dm$^2$.

10. Utilisation d'un copolymère de propylène et de 1-hexène pour produire un récipient moulé par injection destiné à être utilisé dans un four à micro-ondes selon l'une quelconque des revendications 1 à 9, le copolymère présentant une valeur de MG5, la MG5 étant mesurée selon le test de migration du règlement (UE) n° 10/2011, inférieure à 4,2 mg/dm$^2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009083500 A
- WO 2009077328 A1
- WO 2014195074 A
- EP 45977 A
- EP 361494 A

- EP 728769 A
- EP 1272533 A
- WO 00163261 A
- EP 1012195 A

**Non-patent literature cited in the description**

- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150

- **C.J. CARMAN ; R.A. HARRINGTON ; C.E. WILKES.** *Macromolecules,* 1977, vol. 10, 536
- **C.J. CARMAN ; R.A. HARRINGTON ; C.E. WILKES.** *Macromolecules,* 1977, vol. 10 (3), 536